Europäisches Patentamt

European Patent Office

Office européen des brevets

(11) Veröffentlichungsnummer: **0 312 766 B1**

(19)

(12) **EUROPÄISCHE PATENTSCHRIFT**

(45) Veröffentlichungstag der Patentschrift: **02.09.92**

(51) Int. Cl.⁵: **H01M 8/06**, H01M 8/04

(21) Anmeldenummer: **88114891.0**

(22) Anmeldetag: **12.09.88**

(54) Beseitigung von Wasserstoff und Sauerstoff im Elektrolyten von im schwerelosen Raum betriebenen Wasserstoff/Sauerstoff-Brennstoffzellenbatterien.

(30) Priorität: **24.09.87 DE 3732213**

(43) Veröffentlichungstag der Anmeldung:
**26.04.89 Patentblatt 89/17**

(45) Bekanntmachung des Hinweises auf die
Patenterteilung:
**02.09.92 Patentblatt 92/36**

(84) Benannte Vertragsstaaten:
**BE DE FR**

(56) Entgegenhaltungen:
**DE-C- 1 288 403**
**FR-A- 1 546 386**
**US-A- 3 525 643**
**US-A- 3 692 585**

**PATENT ABSTRACTS OF JAPAN, Band 9, Nr.**
**280 (E-356)[2003], 8. November 1985; & JP-**
**A-60 124 367 (KOGYO GIJUTSUIN (JAPAN))**
**03-07-1985**

(73) Patentinhaber: **SIEMENS AKTIENGESELL-**
**SCHAFT**
**Wittelsbacherplatz 2**
**W-8000 München 2(DE)**

(72) Erfinder: **Kohlmüller, Hans, Dipl.-Ing.**
**Friedrich-Bauer-Strasse 5**
**W-8520 Erlangen(DE)**

EP 0 312 766 B1

## Beschreibung

Die Erfindung betrifft ein Verfahren zur Beseitigung von Wasserstoff und Sauerstoff im frei beweglichen Elektrolyten von im schwerelosen Raum betriebenen $H_2/O_2$-Brennstoffzellenbatterien sowie eine Vorrichtung zur Durchführung dieses Verfahrens.

Bei Brennstoffzellen bzw. Brennstoffzellenbatterien, die mit gasförmigen Reaktanten, wie Wasserstoff und Sauerstoff, und mit einem flüssigen, frei beweglichen Elektrolyten betrieben werden, gelangen diese Reaktanten - infolge von Undichtigkeiten und aufgrund der Löslichkeit von Gasen in Flüssigkeiten - in den Elektrolyten bzw. in den Elektrolytkreislauf. Bei einem "normalen" Betrieb der Batterien erfolgt im Elektrolyttank (Elektrolytvorratsbehälter) - aufgrund der Schwerkraft - eine Trennung von Gas und Flüssigkeit, so daß die im Elektrolyten gelösten gasförmigen Reaktanten leicht entfernt werden können. Dies ist jedoch im schwerelosen Raum, wie er beispielsweise beim Einsatz von Brennstoffzellenbatterien in der Raumfahrt gegeben ist, nicht der Fall.

Durch den Übertritt von Gasen in den Elektrolyten schäumt dieser auf. Damit ist dann aber eine Volumenvergrößerung und insbesondere auch eine Abnahme der Leitfähigkeit des beispielsweise alkalischen Elektrolyten verbunden, was zu einer Beeinträchtigung der Funktionsfähigkeit der Batterie führt, wenn die Gase nicht beseitigt werden.

In der Raumfahrt wurden zwar bereits Brennstoffzellen eingesetzt (siehe: "Luftfahrttechnik, Raumfahrttechnik", Bd. 16, 1970, Nr. 11/12, Seiten 300 bis 304), Brennstoffzellenbatterien mit flüssigem, frei beweglichem Elektrolyten gelangten bisher im schwerelosen Raum aber noch nicht zur Anwendung. Deshalb hat sich das Problem der Beseitigung der im Elektrolyten gelösten gasförmigen Reaktanten bislang nicht gestellt. Die in anderem Zusammenhang zur Trennung von Gas/Flüssigkeits-Gemischen im schwerelosen Raum ergriffenen Maßnahmen, d.h. die Verwendung von Zentrifugen, Zyklonen, selektiven Membranen und Dochten, kommen für das vorliegende Problem nicht in Betracht, weil sie einerseits sehr aufwendig sind, insbesondere auch in räumlicher Hinsicht, und weil sie andererseits ausnahmslos in nicht unerheblichem Ausmaß mit dem Verbrauch von elektrischer Energie verbunden sind. Dies wäre im vorliegenden Fall aber unerwünscht, weil die Energie der Brennstoffzellenbatterie entnommen werden müßte und damit für den eigentlichen Verbrauchszweck verlorenginge.

Aufgabe der Erfindung ist es, ein Verfahren anzugeben, das die Beseitigung von Wasserstoff und Sauerstoff im frei beweglichen Elektrolyten von im schwerelosen Raum betriebenen $H_2/O_2$-Brennstoffzellenbatterien erlaubt.

Dies wird erfindungsgemäß dadurch erreicht, daß Wasserstoff und Sauerstoff katalytisch zu Wasser umgesetzt werden, und daß der über ein Molverhältnis von $H_2:O_2$ wie 2:1 hinausgehende Anteil eines der gasförmigen Reaktanten im Elektrolyten elektrochemisch an einer Gasverzehrelektrode umgesetzt wird.

Im Elektrolyten von $H_2/O_2$-Brennstoffzellenbatterien treten im wesentlichen nur Wasserstoff und Sauerstoff als gelöste Gase auf. Diese Gase lassen sich katalytisch rekombinieren, d.h. zu Wasser umsetzen. Da die Gase im allgemeinen im Elektrolyten jedoch nicht in dem der Zusammensetzung des Wassers entsprechenden stöchiometrischen Verhältnis vorliegen werden, verbleibt nach dieser Umsetzung im Elektrolyten ein bestimmter Anteil eines der gasförmigen Reaktanten, d.h. des im Überschuß vorliegenden Reaktanten. Dieser Anteil wird dann - erfindungsgemäß - elektrochemisch an einer Gasverzehrelektrode umgesetzt.

Beim erfindungsgemäßen Verfahren wird die Gasverzehrelektrode zu diesem Zweck vorteilhaft auf einem Potential zwischen der Wasserstoff- und der Sauerstoffumsetzung gehalten. Dabei erfolgt dann entweder eine anodische Oxidation von Wasserstoff oder eine kathodische Reduktion von Sauerstoff.

Eine, $H_2/O_2$-Brennstoffzellenbatterie zur Durchführung des erfindungsgemäßen Verfahrens weist einen im Elektrolytkreislauf der Brennstoffzellenbatterie angeordneten Gasrekombinator mit einem Katalysator zur Umsetzung von Wasserstoff mit Sauerstoff, einer Gasverzehrelekrode und einer Bezugselektrode sowie einen Potentiostat und eine Gegenelektrode auf. Der Katalysator befindet sich dabei vorteilhaft auf einem porösen Katalysatorträger.

Bei der erfindungsgemäßen Vorrichtung fungiert der Katalysator (zur Umsetzung von Wasserstoff mit Sauerstoff) vorteilhaft gleichzeitig als Gasverzehrelektrode. Im Elektrolytkreislauf befindet sich dann quasi ein katalytischer Rekombinator in Form einer Elektrode, die sowohl für die Wasserstoff- als auch für die Sauerstoffumsetzung aktiv ist. Dabei wird durch eine potentiostatische Schaltung - unter Verwendung einer Bezugselektrode - das Potential zwischen der Wasserstoff- und der Sauerstoffumsetzung gehalten.

Der Katalysator bzw. die Gasverzehrelektrode besteht vorzugsweise aus Platin. Die Bezugselektrode ist vorzugsweise eine Quecksilberelektrode.

Vorteilhaft ist bei der erfindungsgemäßen Vorrichtung ferner die Gegenelektrode die Brennstoffzellenbatterie, d.h. die Batterie dient als Gegenelektrode, und zwar die Wasserstoffelektrode einer der Brennstoffzellen. Auf diese Weise kann eine Gasentwicklung im Elektrolytkreislauf unterbunden werden. Zweckmäßigerweise wird dann die Elektrolytverbindung zwischen Gasrekombinator und Brennstoffzellenbatterie niederohmig ausgestaltet. Die Gegenelektrode kann aber auch eine Wasserstoffelektrode sein, die Bestandteil des Gasrekombinators ist. Aufbau und Funktionsweise einer derartigen Gegenelektrode entsprechen denjenigen einer Brennstoffzellenelektrode (für die Wasserstoffumsetzung).

Anhand eines Ausführungsbeispieles und einer Figur, in der schematisch im Schnitt eine bevorzugte Ausführungsform einer Vorrichtung zur Durchführung des erfindungsgemäßen Verfahrens dargestellt ist, soll die Erfindung noch näher erläutert werden.

Im Elektrolytkreislauf 1 einer $H_2/O_2$-Brennstoffzellenbatterie 2 (mit Gaszuführungskanälen 9 und 10 für Wasserstoff bzw. Sauerstoff und entsprechenden Gasabführungskanälen 11 bzw. 12) ist ein Gasrekombinator 3 angeordnet. Die Elektrolytzirkulation wird mit einer Kreiselpumpe 4 aufrechterhalten. Volumenänderungen des Elektrolyten durch Reaktionswasser und Gasanteile werden mit Hilfe eines Konstantdruck-Elektrolytbehälters 5 ausgeglichen. Der Elektrolytbehälter weist dazu beispielsweise eine Membran oder eine Blase auf, die mit Gasdruck beaufschlagt ist.

Der Gasrekombinator 3 weist einen Katalysator 6 zur Umsetzung von Wasserstoff mit Sauerstoff sowie eine Bezugselektrode 7 auf. Der Katalysator 6 ist auf einen porösen Katalysatorträger aufgebracht und dient gleichzeitig als Gasverzehrelektrode. Bei der Verwendung eines alkalischen Elektrolyten, wie Kalilauge, besteht der Katalysator beispielsweise aus platiniertem Sinternickel. Beim Einsatz eines sauren Elektrolyten, wie Phosphorsäure, wird als Katalysator beispielsweise auf Kohle aufgebrachtes Platin verwendet.

Der im Elektrolytkreislauf 1 befindliche Katalysator 6 setzt Wasserstoff und Sauerstoff zu Wasser um. Da der Katalysator ferner als Gasverzehrelektrode dient, setzt er ferner das im Überschuß vorhandene Gas durch einen von außen aufgeprägten Strom anodisch bzw. kathodisch um. Dazu sind der Katalysator 6, d.h. die Gasverzehrelektrode, und die Bezugselektrode 7, die beispielsweise eine $Hg/Hg_2Cl_2$- oder $Hg/HgO$-Elektrode (im alkalischen Elektrolyten) bzw. eine $Hg/Hg_2SO_4$-Elektrode (im sauren Elektrolyten) ist, jeweils an einen Potentiostat 8 angeschlossen. Der Potentiostat 8 wiederum ist mit der Brennstoffzellenbatterie 1 verbunden, und zwar mit deren Pluspol. Die Batterie wirkt somit als Gegenelektrode für den Potentiostat. Durch einen derartigen Aufbau wird eine Gasentwicklung im Elektrolytkreislauf vermieden.

Das Potential der Gasverzehrelektrode wird mittels des Potentiostaten zwischen der Wasserstoffumsetzung und der Sauerstoffumsetzung gehalten, wobei ein Wasserstoffüberschuß im Elektrolyten durch anodische Oxidation abgebaut wird, ein Sauerstoffüberschuß durch kathodische Reduktion. Die Energieversorgung erfolgt über die Brennstoffzellenbatterie, wobei der Ionenstrom von der Batterie, d.h. deren Elektroden, über den Elektrolytkanal zur Gasverzehrelektrode fließt; dabei ist eine Potentialtrennung zwischen Batterie und Potentiostat erforderlich. Damit - bei vorgegebenem Strom - die Spannung niedrig ist, wird der Widerstand im Elektrolytkanal zweckmäßigerweise möglichst niedrig gehalten.

Um die Elektrolytverbindung zwischen Gasverzehrelektrode bzw. Gasrekombinator und Brennstoffzellenbatterie niederohmig zu gestalten, wird der Gasrekombinator möglichst nahe an der Batterie angebracht, d.h. im Elektrolytkanal in der Nähe des Batterieeingangs. Die Gasverzehrelektrode und die Bezugselektrode werden dann an den Eingang des Potentiostaten angeschlossen, und dessen Ausgang wird mit der Wasserstoffelektrode der letzten Brennstoffzelle der Batterie verbunden.

Wird der Elektrolyt einer alkalischen $H_2/O_2$-Brennstoffzellenbatterie, die beispielsweise einen Aufbau entsprechend der DE-PS 27 29 640 aufweist, wobei der Elektrolyt von den Elektroden jeweils durch ein Asbestdiaphragma getrennt ist, über diese Asbestdiaphragmen mit Wasserstoff bzw. Sauerstoff gesättigt, so müssen im Gasrekombinator mindestens diese Gasmengen umgesetzt werden. Die Sättigungsgeschwindigkeit für die Gase im Elektrolyten ist dabei diffusionsbegrenzt. Für eine 70zellige Batterie beispielsweise gilt folgendes.

Bei einer Diaphragmenfläche von 340 $cm^2$ (Gesamtfläche in der Batterie: 23 800 $cm^2$), einer Diaphragmenstärke von 0,3 mm, einem Diffusionskoeffizienten (für Wasserstoff bzw. Sauerstoff) von ca. $10^{-5}$ $cm^2.s^{-1}$, einem Gasdruck von ca. 2 bar und einer Konzentration von ca. $10^{-4}$ $mol.kg^{-1}.bar^{-1}$ bzw. $2.10^{-7}$ $mol.cm^{-3}$ beträgt die durch Diffusion in den Elektrolyten eingebrachte Gasmenge bei Wasserstoff und Sauerstoff - wegen der ähnlichen Löslichkeit in Lauge und dem ähnlichen Diffusionskoeffizienten - jeweils ca. $3.10^{-3}$ $mol.h^{-1}$.

Wenn es gelingt, die Elektrolyteinheiten der Brennstoffzellenbatterie weitgehend dicht zu gestalten, dann müssen im wesentlichen nur die durch Diffusion in den Elektrolyten gelangten Gase beseitigt werden. Da die Diffusionsraten für Wasserstoff und Sauerstoff aber ähnlich sind, wird ein wesentlicher Teil der im Elektrolyten vorhandenen Gase bereits durch die katalytische Umsetzung beseitigt. Der nicht umgesetzte Anteil vermindert den Konzentrationsgradienten, so daß der Konzentrationsanstieg der im Überschuß vorhandenen Komponente verlangsamt wird. Die Anreicherungsrate für diese Komponente, die dann elektrochemisch beseitigt wird, wird somit in einem Bereich liegen, der nach dem Faradayschen Gesetz einem Strom von etwa 10 bis 20 mA entspricht.

Bei einer $H_2/O_2$-Brennstoffzellenbatterie der vorstehend genannten Art - mit Wasserstoffelektroden aus titanhaltigem Raney-Nickel und Sauerstoffelektroden aus dotiertem Silber sowie Kalilauge als Elektrolyt - beträgt der Widerstand vom Elektrolytkanal zum Elektrolytvorratsbehälter ca. 5 Ω. Die Summe aller Widerstände von den Brennstoffzellen zum Elektrolytkanal liegt im Bereich von 3,5 Ω. Bei einer Batteriespannung von 70 V beträgt der maximale Strom zum Gasrekombinator etwa 10 A. Entsprechend dem Faraday-Äquivalent (0,42 l $H_2$/Ah bzw. 0,21 l $O_2$/Ah) könnten damit Undichtigkeiten von ca. 4 l $H_2$/h oder ca. 2 l $O_2$/h bewältigt werden.

Die Reaktionsgase, d.h. Wasserstoff und Sauerstoff, sind nicht vollständig rein, so daß es zu einer Anreicherung von Inertgasanteilen im Elektrolyten kommt. Bei den gegebenen Volumenverhältnissen ist zu erwarten, daß im Elektrolyten 1 Liter Gas als Schaum problemlos toleriert werden kann. Bei der Verwendung von Gasen mit einer Reinheit von 99,9 % und einem Eindringen der gasförmigen Reaktanten in den Elektrolyten ausschließlich durch Diffusion ist eine Betriebszeit von 10 000 h zu erwarten. Bei zusätzlichen Undichtigkeiten in der Batterie, d.h. bei einem Gasaustritt in einer Menge von ca. 2 bis 4 l/h, die vom Gasrekombinator noch zu bewältigen ist, kann eine Betriebszeit von ca. 1000 h erreicht werden.

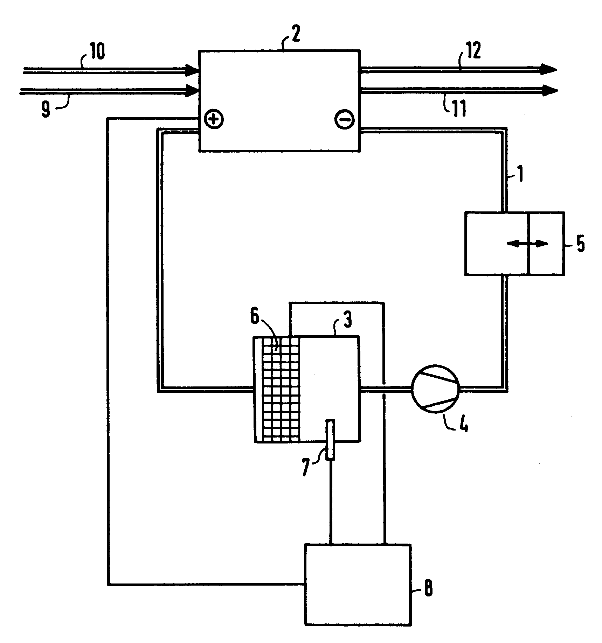

**Patentansprüche**

1. Verfahren zur Beseitigung von Wasserstoff und Sauerstoff im flüssigen, frei beweglichen Elektrolyten von im schwerelosen Raum betriebenen $H_2/O_2$-Brennstoffzellenbatterien, **dadurch gekennzeichnet,** daß Wasserstoff und Sauerstoff katalytisch zu Wasser umgesetzt werden, und daß der über ein Molverhältnis von $H_2:O_2$ wie 2:1 hinausgehende Anteil eines der gasförmigen Reaktanten im Elektrolyten elektrochemisch an einer Gasverzehrelektrode umgesetzt wird.

2. Verfahren nach Anspruch 1, **dadurch gekennzeichnet,** daß die Gasverzehrelektrode auf einem Potential zwischen der Wasserstoff- und der Sauerstoffumsetzung gehalten wird, und daß entweder eine anodische Oxidation von Wasserstoff oder eine kathodische Reduktion von Sauerstoff erfolgt.

3. $H_2/O_2$-Brennstoffzellenbatterie zum Betrieb im schwerelosen Raum mit einer Vorrichtung zur Beseitigung von Wasserstoff und Sauerstoff im flüssigen, frei beweglichen Elektrolyten, **gekennzeichnet** durch einen im Elektrolytkreislauf (1) der Brennstoffzellenbatterie (2) angeordneten Gasrekombinator (3) mit einem Katalysator (6) zur Umsetzung von Wasserstoff mit Sauerstoff, einer Gasverzehrelektrode und einer Bezugselektrode (7), einen Potentiostat (8) und eine Gegenelektrode.

4. $H_2/O_2$-Brennstoffzellenbatterie nach Anspruch 3, **dadurch gekennzeichnet,** daß sich der Katalysator (6) auf einem porösen Katalysatorträger befindet.

5. $H_2/O_2$-Brennstoffzellenbatterie nach Anspruch 3 oder 4, **dadurch gekennzeichnet,** daß der Katalysator (6) gleichzeitig die Gasverzehrelektrode ist.

6. $H_2/O_2$-Brennstoffzellenbatterie nach einem der Ansprüche 3 bis 5, **dadurch gekennzeichnet,** daß der Katalysator bzw. die Gasverzehrelektrode aus Platin besteht.

7. $H_2/O_2$-Brennstoffzellenbatterie nach einem oder mehreren der Ansprüche 3 bis 6, **dadurch gekennzeichnet,** daß die Gegenelektrode eine der Wasserstoffelektroden der Brennstoffzellenbatterie (1) ist.

8. $H_2/O_2$-Brennstoffzellenbatterie nach einem oder mehreren der Ansprüche 3 bis 7, **dadurch gekennzeichnet,** daß die Bezugselektrode (7) eine Quecksilberelektrode ist.

**Claims**

1. Process for the removal of hydrogen and oxygen in the liquid freely movable electrolyte of $H_2/O_2$ fuel cell batteries operated in a weightless environment, characterised in that hydrogen and oxygen are catalytically converted to water and in that the portion of one of the gaseous reactants in the electrolyte, exceeding a mole ratio of $H_2:O_2$ such as 2:1, is reacted electro-chemically at a gas dissipation electrode.

2. Process according to claim 1, characterised in that the gas dissipation electrode is kept at a potential between the hydrogen- and oxygen-reaction, and in that either an anodic oxidation of hydrogen or a cathodic reduction of oxygen occurs.

3. $H_2/O_2$ fuel cell battery for operation in a weightless environment, having a device for the removal of hydrogen and oxygen in the liquid, freely movable electrolyte, characterised by a gas recombiner (3) arranged in the electrolyte circuit (1) of the fuel cell battery (2), having a catalyst (6) for the reaction of hydrogen with oxygen, a gas dissipation electrode and a reference electrode (7), a potentiostat (8) and a counter electrode.

4. $H_2/O_2$ fuel cell battery according to claim 3, characterised in that the catalyst (6) is on a porous catalyst carrier.

5. $H_2/O_2$ fuel cell battery according to claim 3 or 4, characterised in that the catalyst (6) is also the gas dissipation electrode.

6. $H_2/O_2$ fuel cell battery according to one of claims 3 to 5, characterised in that the catalyst or the gas dissipation electrode is made of platinum.

7. $H_2/O_2$ fuel cell battery according to one or more than one of claims 3 to 6, characterised in that the counter electrode is one of the hydrogen electrodes of the fuel cell battery (1).

8. $H_2/O_2$ fuel cell battery according to one or more than one of claims 3 to 7, characterised in that the reference electrode (7) is a mercury electrode.

## Revendications

1. Procédé pour éliminer de l'hydrogène et de l'oxygène dans un électrolyte, liquide et librement mobile, de batteries de piles à combustible $H_2/O_2$ fonctionnant en apesanteur, caractérisé en ce qu'il consiste à transformer catalytiquement l'hydrogène et l'oxygène en eau et à faire réagir électrochimiquement, sur une électrode consommable au gaz, la proportion de l'un des réactifs gazeux dépassant un rapport molaire de $H_2/O_2$ tel que 2:1.

2. Procédé suivant la revendication 1, caractérisé en ce qu'il consiste à maintenir l'électrode consommable au gaz à un potentiel compris entre la réaction de l'hydrogène et la réaction de l'oxygène et à effectuer une oxydation anodique de l'hydrogène ou une réduction cathodique de l'oxygène.

3. Batterie de piles à combustible $H_2/O_2$, destinée à fonctionner en apesanteur et comprenant un dispositif d'élimination de l'hydrogène et de l'oxygène dans un électrolyte liquide et librement mobile, caractérisée par un recombinateur (3) de gaz, qui est disposé dans le circuit d'électrolyte (1) de la batterie de piles à combustible (2) et qui comporte un catalyseur (6) de réaction de l'hydrogène sur l'oxygène, une électrode consommable au gaz et une électrode de référence (7), un potentiostat (8) et une contre-électrode.

4. Batterie de piles à combustible $H_2/O_2$ suivant la revendication 3, caractérisée en ce que le catalyseur (6) se trouve sur un support poreux de catalyseur.

5. Batterie de piles à combustible $H_2/O_2$ suivant la revendication 3 ou 4, caractérisée en ce que le catalyseur (6) est en même temps l'électrode consommable au gaz.

6. Batterie de piles à combustible $H_2/O_2$ suivant l'une des revendications 3 à 5, caractérisée en ce que le catalyseur ou l'électrode consommable au gaz sont en platine.

7. Batterie de piles à combustible $H_2/O_2$ suivant l'une ou plusieurs des revendications 3 à 6, caractérisée en ce que la contre-électrode est l'une des électrodes à hydrogène de la batterie de piles à combustible (1).

8. Batterie de piles à combustible $H_2/O_2$ suivant l'une ou plusieurs des revendications 3 à 7, caractérisée en ce que l'électrode de référence (7) est une électrode au mercure.